# EUROPÄISCHE PATENTSCHRIFT

(11) **EP 0 807 092 B1**
(45) Veröffentlichungstag und Bekanntmachung des Hinweises auf die Patenterteilung: **11.04.2001**
(21) Anmeldenummer: 96900277.3
(22) Anmeldetag: 17.01.1996
(51) Int. Cl.: C04B 35/628, C04B 35/111, C04B 35/486

(54) **VERFAHREN ZUR HERSTELLUNG KERAMISCHER PULVER MIT HYDROPHOBIERTER OBERFLÄCHE SOWIE DEREN VERWENDUNG**
METHOD OF PRODUCING CERAMIC POWDERS WITH A SURFACE WHICH IS MADE HYDROPHOBIC AND THEIR USE
METHODE DE FABRICATION DE POUDRES CERAMIQUES A SURFACE RENDUE HYDROPHOBE ET LEUR UTILISATION

(30) Priorität: 31.01.1995 DE 19502890; 16.12.1995 DE 19547183
(43) Veröffentlichungstag der Anmeldung: 19.11.1997
(60) Teilanmeldung: 00112656.4
(73) Patentinhaber: ROBERT BOSCH GMBH, 70442 Stuttgart (DE)
(72) Erfinder: WEBER, Lothar, D-70499 Stuttgart (DE); EISELE, Ulrich, D-70199 Stuttgart (DE); NASS, Ruediger, D-66292 Riegelsberg (DE)
(86) Internationale Anmeldenummer: DE9600051
(87) Internationale Veröffentlichungsnummer: WO9623744

(56) Entgegenhaltungen:
- EP-A- 0 354 896
- EP-A- 0 378 414
- EP-A- 0 588 171
- US-A- 5 001 091
- US-A- 5 145 719

## Beschreibung

### Stand der Technik

Es ist bekannt, daß Metalloxide auf ihrer Oberfläche in der Regel Hydroxylgruppen tragen. Das gilt besonders dann, wenn die Oxide in wässerigem Medium durch Fällung der Metallionen als Hydroxide oder Oxidhydrate und nachfolgende Dehydratisierung hergestellt wurden. Abhängig vom jeweiligen Metall, können die Metalloxide basischen, sauren oder amphoteren Charakter haben, d.h. die Hydroxidgruppen können Protonen abgeben und/oder anlagern. Durch Messung des pH einer wäßrigen Suspension des Oxids läßt sich der basische, saure oder amphotere Charakter eines Oxids feststellen. Die Menge der Hydroxidgruppen auf der Oberfläche läßt sich durch Säure/Base-Titration bestimmen.

Die Hydroxidgruppen verleihen den Oxiden einen mehr oder minder ausgeprägten hydrophilen Charakter. Bei der Herstellung von Dispersionen aus feinteiligen Oxiden treten die Hydroxidgruppen auf der Oberfläche eines bestimmten Oxidteilchens in attrahierende Wechselwirkung mit Hydroxidgruppen auf der Oberfläche benachbarter Teilchen und bewirken so einen gewissen Zusammenhalt der Teilchen, der zu Agglomerationen führt und somit die Dispergierbarkeit der Oxidteilchen herabmindert. Es ist bekannt, daß man diesem Effekt durch Zusatz von kationischen oder anionischen Dispergiermitteln entgegenwirken kann. Diese erzeugen auf der Oberfläche der Teilchen, abhängig vom jeweiligen Metall, positive oder negative Ladungen, die zwar in erwünschter Weise der Agglomeration entgegenwirken, aber zumindest bei sehr feinteiligen Dispersionen infolge der Coulomb'schen Abstoßung zu Abständen von Teilchen zu Teilchen führen, die an die Größenordnung der Teilchendurchmesser herankommen oder sogar größer sein können. Dadurch wird es schwierig oder unmöglich, die vielfach erwünschten Dispersionen mit sehr kleinen Teilchendurchmesern und trotzdem hohen Feststoffgehalten herzustellen.

Aus EP 0 588 171 A1 ist bekannt, ein wasserempfindliches, keramisches Aluminiumnitrit-Pulver mit einer hydrophobierten Oberflächenbeschichtung zu versehen, um dieses Pulver dann in Wasser zu dispergieren und in ein rieselfähiges Granulat zu überführen. Das dort angegebene Verfah-ren eignet sich besonders für nichtoxidische Pulver und vor allem für Aluminiumnitrit. Als Lösungsmittel bei der Herstellung der hydrophobierten Oberflächenbeschichtung des keramischen Pulvers, wird ein mit Wasser mischbares Lösungsmittel, beispielsweise Propanol oder Wasser, eingesetzt. Dieses Lösungsmittel wird nach der Oberflächenhydrophobierung in einem Rotationsverdampfer abgezogen. Als hydrophober organischer Rest zur Erzeugung der hydrophobierten Oberfläche der keramischen Pulverteilchen werden in EP 0 588 171 A1 gesättigte oder ungesättigte Fettsäuren oder deren Derivate sowie organometallische Substanzen, Silikone oder organische Polymere eingesetzt.

Aus US 5,001,091 sind keramische Pulver bekannt, die mit organischen Substanzen, beispielsweise Stearolsäure, beschichtet wurden. Die derart erzielte Oberflächenbeschichtung der keramischen Pulver dient der Vermeidung von inneren Oberflächen oder Hohlräumen in diesen Pulvern, um deren Verarbeitung als Dispersionen zu erleichtern. Die aufgebrachten Oberflächenbeschichtungen werden vor der Weiterverarbeitung des keramischen Pulvers in einer Entwachsungsphase wieder vollständig entfernt.

### Vorteile der Erfindung

Durch die Erfindung werden keramische Pulver mit hydrophobierter Oberfläche geschaffen, die sich besonders zur Herstellung von stabilen Dispersionen (sogenannten keramischen Schlickern) mit sehr kleinen mittleren Teilchengrößen und hohem Feststoffgehalt eignen, wie sie für hochwertige, nach dem Sinterverfahren hergestellte Formkörper benötigt werden. Der Grund dafür liegt darin, daß die Teilchen infolge der sterischen Stabilisierung, die durch die Hydrophobierung nach der Erfindung bewirkt wird, einen gegenüber der elektrostatischen Stabilisierung mittels kationischer und anionischer Dispergiermittel verminderten Platzbedarf haben. Daher lassen sich mit den hydrophobierten keramischen Pulvern nach der Erfindung stabile Dispersionen herstellen, die gegenüber elektrostatisch stabilisierten Dispersionen bei gleicher Viskosität einen höheren Feststoffgehalt oder bei gleichem Feststoffgehalt eine niedrigere-Viskosität aufweisen. Extrem feine keramische Pulver lassen sich überhaupt nur zu vernünftig verarbeitbaren Dispersionen verarbeiten, wenn sie erfindungsgemäß hydrophobiert werden.

Die Hydrophobierung von keramischen Pulvern unterschiedlichen Ursprungs führt zu einer Vergleichmäßgigung der Eigenschaften, d.h. zur Maskierung oder Unterdrückung bestimmter herkunftsbedingter Charakteristika, die anderenfalls ein unterschiedliches Verhalten verursachen würden. Dadurch lassen sich keramische Pulver unterschiedlicher Herkunft und mit verschiedenen Eigenschaften in gleicher Weise verarbeiten.

Die Prozeßführung bei der Weiterverarbeitung wird also unabhängig von den individuellen Eigenschaften der Rohstoffe.

Bei den getrockneten keramischen Grünkörpern führt die Hydrophobierung der Oberfläche der Pulverteilchen zu einer erhöhten Flexibilität, die für verschiedene Anwendungen erwünscht ist.

Weiterhin zeigen keramische Schlicker, die aus hydrophobierten keramischen Pulvern nach der Erfindung hergestellt wurden und daher sterisch stabilisiert sind, gegenüber elektrostatisch stabilisierten Schlickern unter sonst gleichen Bedingungen keine oder eine deutlich niedrigere Fließgrenze, was für weitere Verarbeitung der Schlicker vorteilhaft ist.

### Zeichnungen

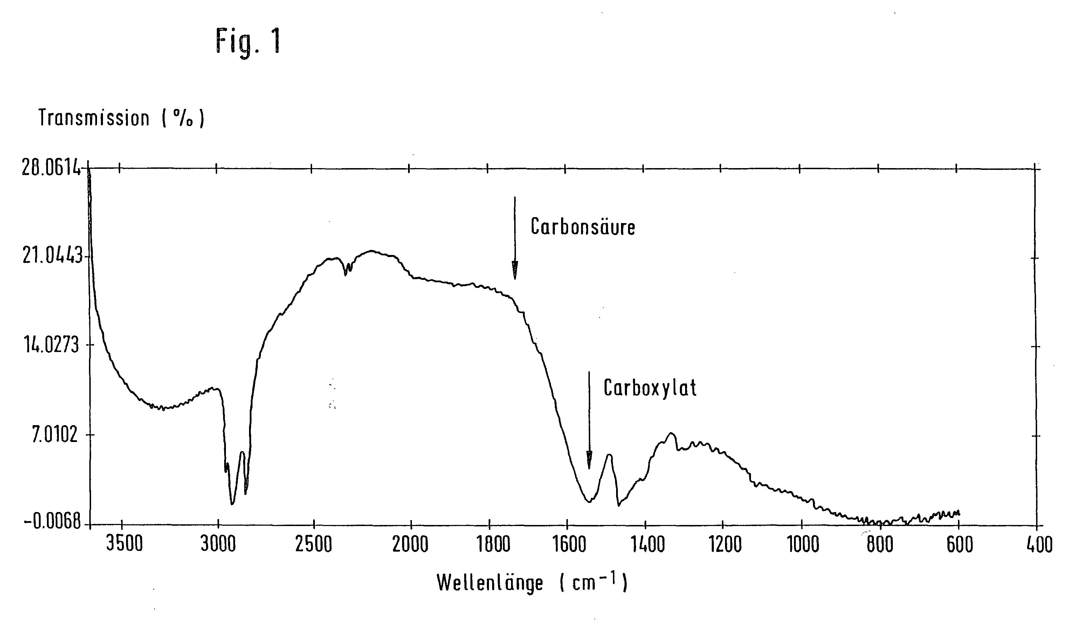

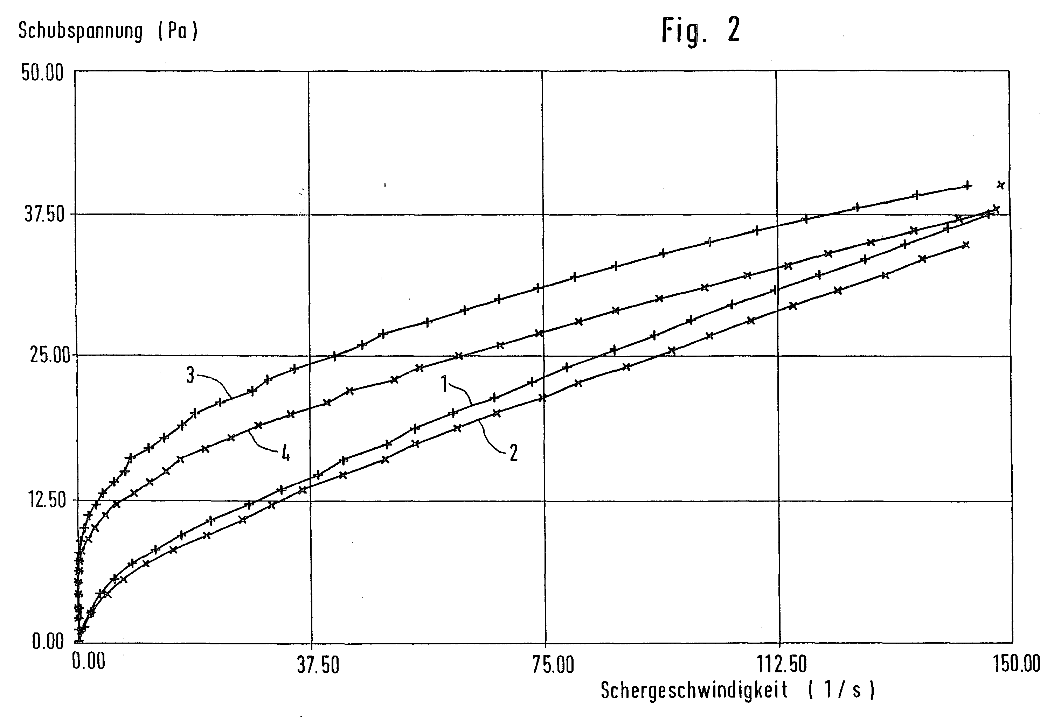

Figur 1 stellt das IR-Spektrum eines Zirkondioxids dar, das mit Palmitinsäure hydrophobiert wurde. Figur 2 zeigt Fließkurven von keramischen Schlickern, die aus hydrophobiertem Aluminiumoxid hergestellt wurden (mit (1) und (2) bezeichnet), sowie zum Vergleich Fließkurven von keramischen Schlickern mit gleichem Feststoffgehalt, die aus dem entsprechenden, aber nicht hydrophobierten Aluminiumoxid hergestellt wurden (mit (3) und (4) bezeichnet).

### Beschreibung der Erfindung

Der wesentliche Gedanke der Erfindung besteht darin, keramische Pulver mit hydrophobierter Oberfläche zur Herstellung von Dispersionen mit mittleren Teilchengrößen im Mikrometer- und Nanometerbereich und mit hohem Feststoffgehalt zu verwenden, wodurch die geschilderten Vorteile erreicht werden.

### 1. Die keramischen Pulver mit hydrophobierter Oberfläche

Die keramischen Pulver mit hydrophobierter Oberfläche bestehen aus Teilchen, die der Formel

P-(XR)ₘ I

entsprechen. In der Formel bedeutet P ein keramisches Pulverteilchen; R eine hydrophoben organischen Rest; X ein Brükkenglied, das den hydrophoben organischen Rest R an das keramische Pulverteilchen P bindet; und steht m für eine ganze Zahl > 1.

### 1.1 Die keramischen Pulverteilchen P

Die keramischen Pulverteilchen P bestehen entweder (1) aus einem oxidischen keramischen Material mit oberflächlich gebundenen Hydroxidgruppen oder (2) aus einem nichtoxidischen keramischen Material, das jedoch eine oxidische Oberfläche mit Hydroxidgruppen aufweist. Die Materialien (2) können auch als nichtoxidische keramische Materialien mit Oxidhaut bezeichnet werden, womit jedoch nicht gesagt sein soll, daß diese Oxidhaut notwendigerweise zusammenhängend ist. Die oxidischen oder nichtoxidischen Materialien (1) und (2) werden als keramische Materialien bezeichnet, wenn sie sich bei hohen Temperaturen zu keramischen Körpern zusammensintern lassen.

Die oxidischen keramischen Materialien (1) leiten sich von ein- oder mehrwertigen Elementen ab, die Oxide mit basischem, saurem oder amphoterem Charakter bilden können, je nach dem, ob die auf der Oberfläche befindlichen Hydroxidgruppen dazu neigen, Protonen anzulagern oder abzugeben oder Protonen sowohl anzulagern als auch abzugeben vermögen. Es ist gut bekannt, welche Oxide basische, welche saure und welche amphotere Eigenschaften zeigen. Im Zweifelsfall kann der Charakter eines Oxids durch Messung des pH einer wäßrigen Aufschlämmung des Oxidpulvers ermittelt werden. Liegt der pH bei etwa 7, so hat das betreffende Oxid im Sinne der Erfindung amphoteren Charakter. Beträgt der pH <7, so liegt ein Oxid mit saurem Charakter vor, ein pH >7 zeigt ein Oxid mit basischem Charakter an. Dabei ist zu beachten, daß manche Oxide von ihrer Herstellung her oberflächlich gebundene Verunreinigungen enthalten können, die das Meßergebnis verfälschen. So weisen durch Verbrennen von Metallhalogeniden gewonnene, sogenannte pyrogene Oxide in der Regel Halogenidreste auf, die durch Hydrolyse Chlorwasserstoff bilden, der bei der pH-Messung ein Oxid mit saurem Charakter vortäuscht. Daher zeigt eine Aufschlämmung von handelsüblichem, pyrogenem Zirkondioxidpulver einen pH von ca. 3. Wäscht man das Pulver vor der Messung mit verdünntem Ammoniakwasser und spült gründlich mit Wasser nach, so beträgt der pH etwa 7. Zirkondioxid ist dementsprechend im Sinne der Erfindung ein amphoteres Oxid.

Von den Oxiden mit basischem Charakter seien z.B. Magnesiumoxid, Zinkoxid und Kupferoxid (CuO) erwähnt. Für die Erfindung geeignete Oxide mit saurem Charakter sind u.a. Siliciumdioxid, Germaniumdioxid und Bortrioxid (B₂O₃). Brauchbare Oxide mit amphoterem Charakter sind z.B. Aluminiumoxid, Zirkondioxid, Titandioxid, Hafniumdioxid und Yttriumoxid (Y₂O₃). Auch Gemische von Oxiden oder Verbindungen von Oxiden können nach der Erfindung oberflächlich hydrophobiert werden, beispielsweise Spinelle und Perowskite.

Zu den geeigneten nichtoxidischen keramischen Materialien (2) zählen insbesondere Carbide, Nitride, Boride und Silicide, die eine oxidische Oberfläche mit Hydroxidgruppen bilden. Geeignete Carbide sind kovalente Carbide, wie Siliciumcarbid und Borcarbid, sowie metallartige Carbide, wie Wolframcarbid, Titancarbid und Vanadiumcarbid. Geeignete Nitride sind u.a. kovalente Nitride, wie Bornitrid, Siliciumnitrid und Aluminiumnitrid. Von den geeigneten Boriden seien beispielsweise Aluminiumborid, Zirkonborid und Wolframborid erwähnt. Die oxidischen Oberflächen mit Hydroxidgruppen leiten sich gegebenenfalls von nur einer der Komponenten ab, die das Carbid, Nitrid, Borid oder Silicid bilden. Beispielsweise finden sich auf Siliciumcarbid SiO₂-Strukturen mit Hydroxidgruppen. Die oxidischen Oberflächen der nichtoxidischen keramischen Pulver (2) entsprechen in ihren Eigenschaften und insbesondere hinsichtlich der Hydrophobierbarkeit nach dem Verfahren der Erfindung den Oberflächen der zuvor beschriebenen entsprechenden, d.h. von demselben Oxidbildner abgeleiteten oxidischen keramischen Materialien. Alle diesbezüglichen Darlegungen gelten daher auch für die nichtoxidischen keramischen Pulver (2).

Bevorzugte keramische Pulver (1) und (2) sind feinteilig. Im Rahmen der vorliegenden Erfindung bedeutet dies, daß ihr mittlerer Teilchendurchmesser im Mikrometer- oder NanometerBereich liegt. Er beträgt im allgemeinen 5 nm bis 5 µm, vorteilhaft 10 nm bis 1 µm.

### 1.2 Der hydrophobe organische Rest R

In der Formel I steht R für einen hydrophoben organischen Rest, d.h. für einen Substituenten, der ausschließlich oder weit überwiegend Kohlenwasserstoffstruktur besitzt. Er enthält zweckmäßig mindestens 6, vorteilhaft mindestens 8 und bis zu 36 Kohlenstoffatome. Bevorzugte Reste R weisen 10 bis 20 Kohlenstoffatome auf. Die hydrophoben organischen Reste R können beispielsweise gesättigte oder ungesättigte Kohlenwasserstoffstruktur aufweisen. Dann handelt es sich um Alkylreste, Cycloalkylreste, Arylreste, Arylalkylreste oder Alkylarylreste. Sie können aber auch ungesättigt, z.B. Alkenyl- oder Alkadienylreste sein. Beispiele für in Betracht kommende Reste sind Octyl, Dodecyl, Hexadecyl, Octadecyl, Tricosyl, 8-Hexadecenyl, 9-Octadecenyl, Cyclododecyl, Cyclododecenyl, Octylphenyl und Phenyldodecyl. Die Reste R können jedoch in untergeordnetem Maße auch Gruppen oder Atome enthalten, die dessen hydrophoben Charakter nicht oder nicht nennenswert beeinträchtigen und unter den Bedingungen des Hydrophobierungsverfahrens inert sind. Als Beispiele seien Etherbrücken, Sulfidbrücken und Halogenatome genannt.

### 1.3 Das Brückenglied X

Das Brückenglied X in der Formel I kann beispielsweise ein Carboxylatrest

-O-CO- II

sein, der zusammen mit dem Rest R gemäß dem erfindungsgemäßen Verfahren einen hydrophoben Carbonsäurerest (oder Acylrest)

-O-CO-R III

bildet. Die Carbonsäurereste III finden sich insbesondere auf keramischen Pulvern mit oxidischen Oberflächen mit basischem oder amphoterem Charakter. Sie leiten sich im allgemeinen von gesättigten oder olefinisch ungesättigten alipha tischen Carbonsäuren mit mindestens 7, vorteilhaft mit 9 bis 37 und insbesondere 11 bis 21 Kohlenstoffatomen ab. Als Beispiele für Carbonsäure- oder Acylreste III seien die von Capronsäure, Caprylsäure, Caprinsäure, Dodecansäure (Laurinsäure), Myristinsäure, Palmitinsäure, Ölsäure, Linolsäure, Stearinsäure, Arachinsäure und Melissinsäure abgeleiteten Reste erwähnt. Die Carbonsäuren können, von der Carboxylgruppe abgesehen, gesättigte oder ungesättigte Kohlenwasserstoffstruktur aufweisen oder aber die zuvor erwähnten Gruppen oder Substituenten enthalten, die unter den Bedingungen des Hydrophobierungsverfahrens inert sind und den hydrophoben Charakter des Substituenten R nicht oder nicht nennenswert beeinträchtigen. Besonders bevorzugt werden jedoch Fettsäuren mit 10 bis 18 Kohlenstoffatomen und die entsprechenden olefinisch ungesättigten Carbonsäuren.

### 1.4 Die Zahl der hydrophoben Reste

In der Formel I steht m für eine ganze Zahl >1, die die Anzahl der hydrophoben Reste -XR auf einem Pulverteilchen wiedergibt. Da die keramischen Pulver eine Teilchengrößenverteilung aufweisen, stellt m einen durchschnittlichen Wert dar, der sich auf die mittlere Teilchengröße bezieht. Weiterhin ist m eine elementspezifische Größe, die die unterschiedliche Neigung der verschiedenen oxidbildenden Elemente zur Ausbildung von Hydroxidgruppen auf der oxidischen Oberfläche widerspiegelt. Der Wert von m läßt sich aus der spezifischen Oberfläche des keramischen Pulvers (beispielsweise durch Laserrückwärtsstreuung zu ermitteln), dem Massegehalt des hydrophobierten keramischen Pulvers an organischem Material (beispielsweise durch thermogravimetrische Analyse zu ermitteln) und der Molmasse der hydrophobierenden Gruppen -XR berechnen. Für die Erfindung kommt es auf den genauen Wert von m nicht an. Die Formulierung "ganze Zahl >1" soll vielmehr ausdrücken, daß die keramischen Pulverteilchen eine unterschiedliche, aber sehr große Zahl von hydrophobierenden Gruppen auf der Oberfläche der Teilchen aufweisen, deren Oberflächenkonzentration im allgemeinen im Bereich von 0,5 bis 50 µmol/cm² liegt.

### 2. Die Herstellung der Pulver mit hydrophober Oberfläche

Zur Herstellung der keramischen Pulver mit hydrophober Oberfläche werden die keramischen Pulverteilchen, die eine oxidische Oberfläche mit Hydroxidgruppen aufweisen, mit einem hydrophobierenden Mittel behandelt. Die Zahl der Hydroxidgruppen pro Pulverteilchen von mittlerer Teilchengröße beträgt mindestens m, ist aber in der Regel größer, weil meistens aus sterischen oder sonstigen Gründen nicht alle vorhandenen Hydroxidgruppen mit dem Hydrophobierungsmittel reagieren. Die Menge der vorhandenen Hydroxidgruppen kann z.B. aus einer Bestimmung der aktiven Wasserstoffatome in den Hydroxidgruppen einer gegebenen Pulvermenge sowie der mittleren Teilchengröße des Pulvers berechnet werden. Die aktiven Wasserstoffatome lassen sich beispielsweise durch Einwirkung von Lithiumalanat auf das sorgfaltig von anhaftendem Wasser befreite keramische Pulver bestimmen. Die Oberflächenkonzentration der Hydroxidgruppen liegt wie die der hydrophobierenden Gruppen in den hydrophobierten keramischen Pulvern im allgemeinen im Bereich von 0,5 bis 50 µmol/cm². Die üblichen für Sinterverfahren verwendeten keramischen Pulver enthalten jedenfalls eine für die mit den oben beschriebenen Vorteilen verbundene Hydrophobierung hinreichende Oberflächenkonzentration an Hydroxidgruppen.

### 2.1 Hydrophobierung mit Acylierungsmitteln

Für die Wahl des Hydrophobierungsmittels kommt es darauf an, ob die oxidischen Oberflächen der Pulverteilchen basischen, sauren oder amphoteren Charakter haben. Acylierungsmittel, die Carbonsäurereste der Formel III ergeben, eignen sich insbesondere für keramische Pulver mit oxidischer Oberfläche von basischem oder amphoterem Charakter. Wie erwähnt, können Verunreinigungen aus der Herstellung der Pulver einen sauren Charakter vortäuschen und sollten daher entfernt werden, wenn ein Acylierungsmittel für die Hydrophobierung verwendet werden soll. Keramische Pulver mit basischem oder amphoterem Charakter der oxidischen Oberfläche können acyliert und dadurch hydrophobiert werden, indem man das keramische Pulver in einer Lösung einer Carbonsäure der Formel

R-COOH, IV

in der R die angegebene Bedeutung hat, in einem inerten Lösungsmittel mit geringem Lösevermögen für Wasser am Rückfluß erhitzt. Die Menge der Carbonsäure sollte mindestens der Menge der auf der Oberfläche der keramischen Pulver vorhandenen Hydroxidgruppen äquivalent sein. Ein Überschuß, z.B. von bis zu 100 % über die zur Acylierung nötige Menge hinaus, schadet jedoch nicht. Als Lösungsmittel mit geringem Lösevermögen für Wasser eignen sich u.a. aliphatische und aromatische Kohlenwasserstoffe, wie n-Octan, Isooctan, Cyclohexan, Toluol und Xylol. Sie dienen zugleich als Schleppmittel für das bei der.Acylierung entstehende Wasser, das man in üblicher Weise abtrennt, während das Lösungsmittel zurückgeführt wird.

In ähnlicher Weise kann man statt einer Carbonsäure das entsprechende Carbonsäureanhydrid einsetzen. Weiterhin kann ein Carbonsäureester, zweckmäßig mit einem Alkohol mit 1 bis 4 Kohlenstoffatomen, wie Methanol, als Acylierungsmittel dienen. In diesem Fall wird der betreffende Alkohol aus dem System entfernt. Schließlich sei noch die Acylierung der Hydroxidgruppen auf der Oberfläche des Oxids mittels Carbonsäurehalogeniden erwähnt, bei der man zweckmäßig ein tertiäres Amin, wie Triethylamin oder Pyridin, zusetzt, um den entstehenden Halogenwasserstoff abzufangen.

### 3. Eigenschaften der hydrophobierten keramischen Pulver

Nach dem beschriebenen Verfahren erhält man keramische Pulver mit hydrophobierter oxidischer Oberfläche, die die hydrophobierenden Reste chemisch gebunden enthalten. Dies folgt u.a. daraus, daß sich selbst mit siedendem Toluol keine Carbonsäure oder andere organische Bestandteile von den mit den beschriebenen Hydrophobierungsmitteln behandelten Oberflächen ablösen lassen. Weiterhin zeigt das IR-Spektrum der hydrophobierten Oberflächen keinen Peak, der einer freien Carboxylgruppe entspricht, wohl aber einen ausgeprägten Peak, der für eine Carboxylatgruppe charakteristisch ist. Bei der Hydrophobierung von oxidischen Oberflächen mit basischem oder amphoterem Charakter durch Behandlung mit einem Acylierungsmittel dürften sich auf der Oberfläche Carboxylatstrukturen der Formel 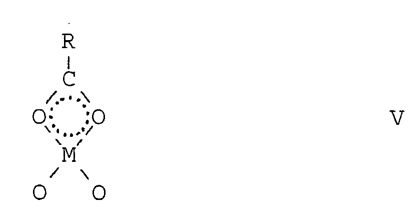 ausbilden, in der M für ein Metallatom des keramischen Pulvers steht und R die für die Formel I angegebene Bedeutung hat. In Figur 1 ist der Carboxylat-Peak gekennzeichnet, ebenso die Stelle, an der der Carbonsäure-Peak auftreten müßte.

### 3. Verwendung von keramischen Pulvern mit hydrophobierter Oberfläche

Keramische Pulver mit hydrophobierter Oberfläche einschließlich der keramischen Pulver mit hydrophobierter Oberfläche nach der Erfindung eignen sich insbesondere zur Herstellung von Dispersionen, die aus sehr kleinen Pulverteilchen, beispielsweise mit mittleren Teilchendurchmessern von <0,3 µm, bestehen und trotzdem einen hohen Feststoffgehalt aufweisen. Von besonderer Bedeutung ist dies für nanodisperse Keramikdispersionen mit mittleren Teilchengrößen von 5 bis 300 nm. Wenn man diese Dispersionen mit anionischen oder kationischen Dispergiermitteln stabilisiert, führt die gegenseitige Abstoßung der Teilchen durch die gleichsinnigen Coulomb'schen Kräfte zu Teilchenabständen von 50-100nm, die nur unerwünscht niedrige Feststoffgehalte einzustellen gestatten. Bei Verwendung von entsprechend feinteiligen keramischen Pulvern mit hydrophobierter Oberfläche sind die Dispersionen dagegen sterisch stabilisiert, d.h. der Abstand von Teilchen zu Teilchen wird im wesentlichen durch die Raumerfüllung der monomolekularen Schicht aus hydrophobierenden Resten bestimmt. Es ist daher beispielsweise möglich, stabile wäßrige Al₂ O₃- oder ZrO₂-Dispersionen mit mittleren Teilchendurchmessern von 20 bis 300 nm und Feststoffgehalten von 30 bis 60 Volumenprozent herzustellen. Diese Dispersionen weisen eine für den hohen Feststoffgehalt überraschend niedrige Viskosität auf, die im allgemeinen zwischen 50 und 1.000 mPa.s liegt.

Zur Herstellung der Dispersionen fügt man dem Oxidpulver mit hydrophobierter Oberfläche die erforderliche Menge Wasser sowie zweckmäßig ein nichtionisches Tensid zu und setzt das Gemisch Scherkräften aus. Das kann z.B. in einem Rührgefäß, einem Kneter oder einer Kugelmühle geschehen. In manchen Fällen empfiehlt es sich, eine gegenüber dem Wasser untergeordnete Menge eine wasserlöslichen organischen Lösungsmittels, wie n-Octanol, Ethanol, i-Propanol, n-Butanol oder Acetylaceton, mitzuverwenden.

Ein überraschender Vorteil der Hydrophobierung nach der Erfindung besteht darin, daß sich Oxide verschiedenen Ursprungs und mit verschiedener Vorgeschichte, die auch bei praktisch gleichen makroskopischen Daten bei der Verarbeitung zu Mikro- oder Nanodispersionen deutliche Eigenschaftsunterschiede zeigen können, nach der Hydrophobierung praktisch gleich verhalten. Das erleichtert die Prozeßführung bei der Weiterverarbeitung und führt zu gut reproduzierbaren Eigenschaften der hergestellten Sinterkörper.

Die Dispersionen werden in üblicher Weise verarbeitet. Werden Sinterkörper aus ihnen hergestellt, so führt der Gehalt an organischem Material, der von der Hydrophobierung herrührt und, je nach Feinheit des Oxidpulvers, bis zu einigen Gewichtsprozent betragen kann, zu keinen besonderen Problemen. Das organische Material wird vielmehr, genau wie die in der Sintertechnik vielfach eingesetzten organischen Plastifizier- und Bindemittel, bei vorsichtigem Erhitzen in sauerstoffhaltiger Atmosphäre auf Temperaturen von 150 bis 400°C praktisch vollständig entfernt.

Die folgenden Beispiele sollen die Erfindung erläutern, aber in keiner Weise begrenzen.

### Beispiel 1 - Hydrophobierung von Zr0₂ mit einer Carbonsäure

Ausgangsprodukt ist ein keramisches ZrO₂ -Pulver mit einer spezifischen Oberfläche von 50 m²/g. Die Teilchengrößen, bestimmt durch Laserrückwärtsstreuung, liegen im Bereich von 80 bis 250 nm, mit einem Mittelwert von 140 nm. 0,1 mol Palmitinsäure werden in 1.000 ml n-Octan unter Rühren und Erwärmen gelöst. In die Lösung werden 0,8 mol ZrO₂ eingetragen. Die auf diese Weise erhaltene Aufschlämmung von ZrO₂ in der Palmitinsäurelösung wird 3 Stunden am Rückfluß erhitzt, wobei das Wasser, das bei der Reaktion der Hydroxidgruppen auf der Oberfläche des keramischen Pulvers mit der Palmitinsäure entsteht, mit Hilfe eines Wasserabscheiders abgetrennt wird. Nach Beendigung der Reaktion wird das keramische Pulver abzentrifugiert, erneut in n-Octan aufgeschlämmt, wieder abzentrifugiert und bei 90°C im Vakuum getrocknet. Die Ausbeute beträgt 95 Masse-%.

Das keramische Pulver ist nun vollständig hydrophobiert und läßt sich nur mit Hilfe eines nichtionischen Tensids in Wasser einbringen. Die Teilchengrößenverteilung ist gegenüber dem Ausgangsprodukt unverändert. Die thermogravimetrische Analyse (TGA) ergibt einen Anteil an organischem Material von 6 Masse-%. Das entspricht einer belegten Fläche von 35 A² pro Molekül Palmitinsäure.

Analoge Ergebnisse werden erhalten, wenn man die Palmitinsäure durch eine äquimolare Menge Ölsäure und/oder das n-Octan durch die gleiche Gewichtsmenge Toluol ersetzt.

### Beispiel 2 - Herstellung von wäßrigen keramischen Schlickern

### 2.1 Schlicker aus unmodifiziertem ZrO₂

Das im Beispiel 1 eingesetzte unmodifizierte, handelsübliche ZrO₂-Pulver läßt sich ohne Zusatz von Dispergiermitteln nur bis zu einem Feststoffgehalt von 18 Vol.-% in Wasser einbringen. Werden dem Wasser vor der Pulverzugabe 5 Masse-%, bezogen auf das Pulver, Acetylaceton zugesetzt, so kann der Feststoffgehalt auf 21 Vol-% erhöht werden. Die Schlicker werden hergestellt, indem dem vorgelegten Wasser bzw. dem Gemisch aus Wasser und Acetylaceton sukzessive und unter Rühren das Pulver zugegeben wird. Versucht man, den Feststoffgehalt über die angegebenen Werte hinaus zu erhöhen, so tritt eine Gelierung ein, und der Schlicker wird steif.

### 2.2 Schlicker aus hydrophobiertem ZrO₂

Bei Verwendung von hydrophobierten keramischen Pulvern aus dem Beispiel 1 kann der Feststoffgehalt des keramischen Schlickers auf 38 Vol. - % erhöht werden. 10,9 g Pulver werden sukzessive in 5 ml Wasser, die 0,6 g eines nichtionische Tensids mit einem HLB-Wert (hydrophilic-lyophilic balance) zwischen 12 und 15 und 0,3 g Isopropanol als Co-Tensid enthalten, eingerührt. Es entsteht ein dünnflüssiger, zum Gießen geeigneter Schlicker. Die Teilchengrößenverteilung, ermittelt durch Laserrrückwärtsstreuung, ist gegenüber dem Ausgangspulver unverändert.

### Beispiel 3 - Hydrophobierung von Al₂ 0₃ mit einer Carbonsäure

Der Ausgangsstoff ist ein handelsübliches keramisches Al₂ O₃-Pulver mit einer spezifischen Oberfläche von 12,43 m²/g und einer mittleren Teilchengröße von 260 nm. 20,55 ml Ölsäure werden mit 1.200 ml n-Octan unter Rühren gemischt. In die Mischung werden 450 g Al₂ O₃ unter Rühren eingetragen. Die entstehende Aufschlämmung wird 4 Stunden am Rückfluß erhitzt. Das Wasser, das bei der Reaktion der OH-Gruppen auf der Oberfläche des keramischen Pulvers mit der Ölsäure entsteht, wird mit Hilfe eines Wasserabscheiders abgetrennt. Nach Beendigung der Reaktion wird das Pulver insgesamt dreimal abzentrifugiert und dazwischen zweimal mit n-Octan gewaschen. Dann wird das Pulver 7 Stunden bei 95°C unter Vakuum getrocknet.

Das Pulver ist nun vollständig hydrophobiert, d.h. es läßt sich nur mit Hilfe eines nichtionischen Tensids in Wasser einbringen. Die Teilchengrößenverteilung gegenüber derjenigen des Ausgangspulvers unverändert. Durch TGA findet man einen Anteil an organischen Bestandteilen von 1,3 Masse-%. Daraus errechnet sich eine belegte Fläche von 45 A² pro Molekül Ölsäure.

### Beispiel 4 - Herstellung eines wäßrigen Schlickers aus hydrophobiertem Al₂ O₃

2.000 g (=500 ml) hydrophobiertes Al₂ O₃-Pulver werden sukzessive unter Rühren in 500 ml eines Gemisches aus 430 ml Wasser, 52,5 ml eines nichtionischen Tensids mit einem HLB zwischen 12 und 15 und 17,5 ml Isopropanol eingetragen. Man erhält einen dünnflüssigen, zum Gießen geeigneten Schlicker.

Figur 2 zeigt einen Vergleich der Fließkurven eines derart hergestellten Schlickers (1) und (2) mit den Fließkurven eines nach dem Stand der Wissenschaft (J. Cesarano III, I.A.Aksay, Processing of Highly Concentrated Aequeous α-Alumina Suspensions Stabilized with Polyelectrolytes, J.Am.Ceram. Soc. 71 [12] (1988), 1062-1067) elektrostatisch stabilisierten Schlickers (3) und (4) aus demselben Ausgangspulver und mit ebenfalls 50 Vol.-% Feststoffanteil. Ein bemerkenswerter Unterschied liegt darin, daß bei den erfindungsgemäß hergestellten Schlickern eine Fließgrenze fehlt, was ein für die Verarbeitung wichtiger Vorteil ist.

## Patentansprüche

1. Verfahren zur Herstellung von keramischen Pulvern mit hydrophobierter Oberfläche, ausgehend von keramischen Teilchen aus einem oxidischen Material oder einem Material mit einer Oxidhaut, wobei die hydrophobierte Oberfläche basischen oder amphoteren Charakter hat und gebundene Hydroxidgruppen auf der Oberfläche aufweist, **dadurch gekennzeichnet**, daß die keramischen Teilchen in einem inerten, mit Wasser nicht mischbaren Lösungsmittel mit einem Acylierungsmittel erhitzt werden, das mit den oberflächlich gebundenen Hydroxidgruppen chemisch unter Freisetzung eines Reaktionsproduktes reagiert und sich auf der Oberfläche der keramischen Pulverteilchen Acylreste der Formel
-O-CO-R (III)
ergeben, in der R für einen hydrophoben organischen Rest mit 6 bis 36 Kohlenstoffatomen steht, und wobei das freigesetzte Reaktionsprodukt fortwährend durch Schlepperdestillation abgeführt wird.

2. Verfahren nach Anspruch 1, dadurch gekennzeichnet, daß das einen Acylrest der Formel (III) ergebende Acylierungsmittel eine Carbonsäure, ein Carbonsäureanhydrid, ein Carbonsäureester oder ein Carbonsäurehalogenid ist.

3. Verfahren nach Anspruch 2, dadurch gekennzeichnet, das die Carbonsäure eine gesättigte oder olefinisch ungesättigte aliphatische Carbonsäure mit 9 bis 37 Kohlenstoffatomen ist.

4. Verfahren nach einem der Ansprüche 1 bis 3, dadurch gekennzeichnet, daß das keramische Pulver Zirkondioxid ist.

5. Verwendung des Verfahrens nach mindestens einem der Ansprüche 1 bis 4 zur Herstellung von Dispersionen mit keramischen Pulvern'mit hydrophobierter Oberfläche sowie einer mittleren Teilchengröße im Mikrometer- und Nanometerbereich und hohem Feststoffgehalt.

## Claims

1. Process for producing ceramic powders having a hydrophobicized surface, starting from ceramic particles comprising an oxidic material or a material having an oxide skin, where the hydrophobicized surface has basic or amphoteric character and has bound hydroxide groups on the surface, characterized in that the ceramic particles are heated in an inert, water-imiscible solvent with an acylating agent which reacts chemically with the hydroxide groups bound to the surface with liberation of a reaction product and forms acyl radicals of the formula
-O-CO-R (III)
where R is a hydrophobic organic radical having from 6 to 36 carbon atoms, on the surface of the ceramic powder particles, and the reaction product liberated is continually removed by azeotropic distillation.

2. Process according to Claim 1, characterized in that the acylating agent which forms an acyl radical of the formula (III) is a carboxylic acid, a carboxylic anhydride, a carboxylic ester or a carboxylic acid halide.

3. Process according to Claim 2, characterized in that the carboxylic acid is a saturated or olefinically unsaturated aliphatic carboxylic acid having from 9 to 37 carbon atoms.

4. Process according to any of Claims 1 to 3, characterized in that the ceramic powder is zirconium dioxide.

5. Use of the process according to at least one of Claims 1 to 4 for producing high-solids-content dispersions of ceramic powders having a hydrophobicized surface and a mean particle size in the micron or nanometer range.

## Revendications

1. Procédé de fabrication de poudres céramiques ayant des surfaces rendues hydrophobes, en partant de particules céramiques en un matériau oxydique ou un matériau avec une pellicule d'oxyde, dans lequel la surface rendue hydrophobe a un caractère basique ou amphotère, et possède des groupes hydroxyde liés sur la surface,
caractérisé en ce que
les particules de céramique sont chauffées dans un solvant inerte, non miscible à l'eau avec un agent d'acylation qui réagit chimiquement avec les groupes hydroxyde liés d'une manière superficielle en libérant un produit de réaction et qui produisent à la surface des particules de poudre céramiques, des restes acyle de formule :
-O-CO-R (III)
dans laquelle R représente un reste organique hydrophobe ayant de 6 à 36 atomes de carbone,
et dans lequel le produit de réaction libéré est évacué d'une manière continue par distillation hétéro-azéotrope.

2. Procédé selon la revendication 1,
caractérisé en ce que
l'agent d'acylation qui produit un reste acyle de formule III, est un acide carboxylique, un anhydride d'acide carboxylique, un ester d'acide carboxylique ou un halogénure d'acide carboxylique.

3. Procédé selon la revendication 2,
caractérisé en ce que
l'acide carboxylique est un acide carboxylique saturé ou oléfiniquement non saturé, aliphatique, ayant de 9 à 37 atomes de carbone.

4. Procédé selon l'une des revendications 1 à 3,
caractérisé en ce que
la poudre céramique est du dioxyde de zirconium.

5. Utilisation du procédé selon au moins une des revendications 1 à 4,
en vue de la préparation de dispersions avec des poudres céramiques ayant des surfaces rendues hydrophobes ainsi qu'une taille moyenne de particules dans la zone du micromètre et du nanomètre et une teneur élevée en matières solides.
